(19) Europäisches Patentamt

European Patent Office

Office européen des brevets

(11) **EP 1 717 265 A1**

(12) **EUROPEAN PATENT APPLICATION**
published in accordance with Art. 158(3) EPC

(43) Date of publication:
02.11.2006 Bulletin 2006/44

(51) Int Cl.:
*C08J 9/12* (2006.01)    *B29C 67/20* (2006.01)
*C08L 67/00* (2006.01)    *B29K 267/00* (2006.01)
*B29K 105/04* (2006.01)

(21) Application number: 05775961.5

(22) Date of filing: 31.08.2005

(86) International application number:
PCT/JP2005/015888

(87) International publication number:
WO 2006/030640 (23.03.2006 Gazette 2006/12)

(84) Designated Contracting States:
CH DE FR GB IT LI

(30) Priority: 14.09.2004 JP 2004266791
24.11.2004 JP 2004338291

(71) Applicant: The Furukawa Electric Co., Ltd.
Chiyoda-ku
Tokyo 100-8322 (JP)

(72) Inventors:
• MASUDA, Kohji,
The Furukawa Electric Co., Ltd.
Tokyo 1008322 (JP)

• ITO, Masayasu,
The Furukawa Electric Co., Ltd.
Tokyo 1008322 (JP)
• YOSHIDA, Naoki,
The Furukawa Electric Co., Ltd.
Tokyo 1008322 (JP)

(74) Representative: Grünecker, Kinkeldey,
Stockmair & Schwanhäusser
Anwaltssozietät
Maximilianstrasse 58
80538 München (DE)

(54) **THERMOPLASTIC RESIN FOAM**

(57)    An object of the present invention is to provide a thermoplastic resin sheet which has both high reflectance ratio and excellent shape-holding property suitable for backlights and illumination boxes for use in illumination signboards, illumination fixtures and displays and illumination boxes.

The thermoplastic resin foam is manufactured by a manufacturing method comprising a process for containing inert gas by holding thermoplastic resin sheet containing metallic oxide in a pressurized inert gas atmosphere and a process for heating the thermoplastic resin sheet in which the inert gas is contained at a temperature higher than the softening temperature of the thermoplastic resin, under normal pressure, and foaming the resin.

EP 1 717 265 A1

**Description**

TECHNICAL FIELD

The present invention relates to thermoplastic resin foam. More particularly, the present invention relates to thermoplastic resin foam having fine pores with mean bubble diameter of 10µm or less within. Since the thermoplastic resin foam obtained according to the present invention has high optical reflectance ratio, the foam can be suitably used in backlights and illumination boxes for illumination signboards, lighting fixtures, displays, and the like.

BACKGROUND ART

Conventionally proposed light reflector plates for use in backlights for illumination signboards, lighting fixtures, displays, and the like, include those fabricated such that a light-reflecting synthetic resin film or sheet is formed into a three-dimensional shape to thereby yield a light reflector plate (refer to, for example, Patent Reference 1).

Known light-reflecting synthetic resin foam film or sheet include synthetic resin film or sheet having numerous fine bubbles or pores within (refer to, for example, Patent Reference 2) and film which is thermoplastic resin film containing fillers, wherein numerous voids are formed with the filler as the core (refer to, for example, Patent Reference 3).

The former thermoplastic resin foam having numerous fine bubbles or pores can be obtained by contacting molten or solid thermoplastic resin with inert gas under increasing pressure, then, decompressing the gas, and heating the resin at a temperature higher than the softening temperature of resin, under normal pressure,, thereby foaming the resin. The obtained thermoplastic resin foam film or sheet has high reflectance ratio since the mean bubble diameter of 50µm or less is fine, excellent shape-retention properties since its thickness can be 200µm or more, and the thermoplastic resin foam film or sheet can be singly fabricated into a three-dimensional shape. In addition, the light reflectance ratio of thermoplastic resin foam film or sheet generally tends to indicate higher values as the number of bubbles per unit volume increases. Therefore, high reflectance ratio can be achieved and the thickness of the film or sheet can also be reduced if foam expansion rate is the same, since the smaller the bubble diameter is, the more the number of bubbles per unit volume is, and, thus, thermoplastic resin foam having numerous finer bubbles or pores is required.

On the other hand, the latter thermoplastic resin film containing fillers can be obtained by forming an unextended film containing fillers such as calcium carbonate and barium sulfate and forming numerous voids with the filler as the core by extending the unextended film. However, since extension processing is performed on the unextended film, the thickness of the obtained film becomes thin, less than 200µm, and, therefore, the film per se will not have shape-retention properties and the light leaking to the backside of the film will also increase. Therefore, the film is used by disposing a plate that has adequate strength and light-shielding properties on the backside of the film.

Incidentally, thermoplastic resin foam containing foaming agent and zinc oxide is known (refer to, for example, Patent Reference 4). In this case, in the foregoing reference, zinc oxide is merely used as a foaming aid for promoting the decomposition of the foaming agent, and through this, it is merely described that foam of a high foaming expansion rate is obtained.

In addition, it is known that the brightness of a reflection sheet is improved by coating a paint containing zinc oxide on the surface of the reflection sheet (refer to, for example, Patent Reference 5). In this case, in the foregoing reference, zinc oxide is merely added as a white pigment.

[Patent Reference 1] Japanese Patent Laid-Open Publication No. 2002-122863
[Patent Reference 2] WO 97/01117 Publication
[Patent Reference 3] Japanese Patent Laid-Open Publication No. 1992-296819
[Patent Reference 4] Japanese Patent Laid-Open Publication No. 1990-242832
[Patent Reference 5] Japanese Utility Model Publication No. 3055588

DISCLOSURE OF THE INVENTION

In recent years, there has been a call for reduction in power consumption, and resin films or sheets having higher reflectance ratio are required. Further, particularly in the fields of illumination signboards and displays, the need for space-saving is increasing, and thickness-reduction of light-reflecting resin films or sheets are required.

The present invention has been accomplished in view of the foregoing, and an object of the invention is to provide a thermoplastic resin foam having high reflectance ratio and shape-holding properties.

As a result of thorough studies in order to solve the foregoing issues, the inventors found that thermoplastic resin foam having fine pores with a pore diameter of 10 µm or less within can be obtained by adding the particles of a metallic oxide to the thermoplastic resin and foaming the resin.

In other words, the present invention provides a thermoplastic resin foam of the following (1) to (5):

(1) A thermoplastic resin foam which is a thermoplastic resin sheet containing a metallic oxide and has fine pores with mean bubble diameter of 10μm or less within.

(2) A thermoplastic resin foam according to (1), wherein the content of the metallic oxide is 0.1 to 15 parts by weight to the thermoplastic resin of 100 parts by weight.

(3) A thermoplastic resin foam according to (1) or (2), wherein the metallic oxide is zinc oxide.

(4) A thermoplastic resin foam according to any one of (1) to (3), wherein the thermoplastic resin is polyester.

(5) A thermoplastic resin foam according to any one of (1) to (4) which is manufactured by a manufacturing method comprising a process for containing inert gas by holding a thermoplastic resin sheet containing metallic oxide in a pressurized inert gas atmosphere and a process for heating the thermoplastic resin sheet containing the inert gas under normal pressure and foaming the resin.

Since the mean bubble diameter of the thermoplastic according to the present invention is fine, 10μm or less, the reflectance ratio of light is high, the thickness of the sheet can be reduced, and the foam can be suitably used as a light-reflecting plate.

BRIEF DESCRIPTION OF DRAWINGS

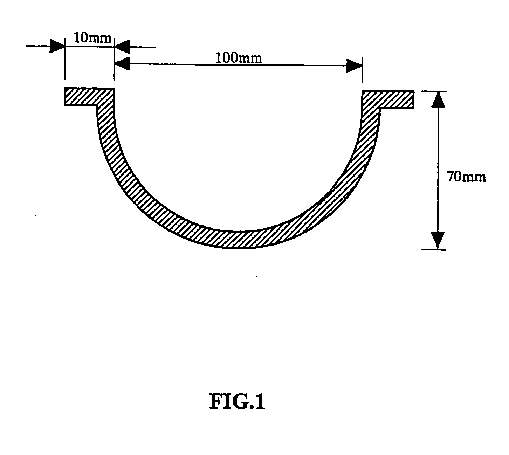

FIG. 1 is a sectional view showing a light-reflecting plate manufactured according to an embodiment of the present invention.

BEST MODE FOR CARRYING OUT THE INVENTION

Although the metallic oxide used in the present invention is not particularly limited, it is preferable that the mean particle diameter of particles is 10 to 3000nm. More preferably, the mean particle diameter is 10 to 2000nm, and most preferably, 10 to 1000nm. If the mean particle diameter is within a range of 10 to 3000nm, the bubble diameter of the obtained foam is smaller.

Although the metallic oxide used in the present invention is not particularly limited, zinc oxide, titanium oxide, iron oxide, tin oxide, tungsten trioxide, vanadium oxide, aluminum oxide, chromic oxide, cobalt oxide, zirconium oxide, hafnium oxide, molybdenum oxide, nickel oxide and the like are given. Of these, zinc oxide and titanium oxide are preferable, and zinc oxide is most preferable.

Although the quantity of metallic oxide added to the thermoplastic resin of 100 parts by weight is not particularly limited, 0.1 to 15 parts by weight is preferable, 0.5 to 10 parts by weight is more preferable, and 0.5 to 7 parts by weight is most preferable. If the quantity of the metallic oxide added is smaller than 0.1 parts by weight, the bubble diameter of the obtained foam tends to become larger, and the dispersion of the bubbles also tends to be uneven. On the other hand, if the quantity of the metallic oxide added exceeds 15 parts by weight, not only is this disadvantageous in terms of cost, but the obtained foam tends to be brittle.

Although the thermoplastic resins used in the present invention are not particularly limited, general-purpose resins such as polyethylene, polypropylene, polystyrene, polyvinylchloride (PVC), polybiphenylchloride, polyethylene terephthalate and polyvinyl alcohol, engineering plastics such as polycarbonate, polybuthylene terephthalate, polyamide, polyacetal, polyphenylene ether, ultra-high molecular weight polyethylene, polysulfone, polyethersulfone, polyphenylenesulfide, polyarylate, polyamideimide, polyetherimide, polyetheretherketone, polyimide, polytetrafluoroethylene, liquid crystal polymer and fluororesin, or copolymers and mixtures thereof are given. Of these, due to superior heat-resistance and impact-resistance properties and the like, polyester, polycarbonate, polysulfone, polyethersulfone, polyphenylenesulfide, polyetherimide and cyclopolyolefin are preferable, and polyester is particularly preferable.

In the present invention, various additives, such as crystallization nuclide, crystallization promoter, bubbling nuclide, antioxidant, antistatic agent, ultraviolet inhibitor, light stabilizer, fluorescent brighter, pigment, dye, compatibilizer, lubricant, fortifier, flame retarder, cross-linking agent, cross-linking aid, plasticizer, thickener, and thinner can be blended into thermoplastic resin before foaming, in a scope that does not affect the characteristics,. In addition, resin containing the foregoing additives can be laminated on the obtained thermoplastic resin foam, or paint containing the various additives may be applied thereon.

Although the method for manufacturing the thermoplastic resin foam of the present invention is not particularly limited, it is preferable that a method such as the following is used, taking into account productivity. In other words, a method, wherein a roll is formed by stacking together and rolling a thermoplastic resin sheet containing a metallic oxide and a separator" inert gas is contained in the thermoplastic resin sheet by holding the roll in a pressurized inert gas atmosphere, and further, the thermoplastic resin sheet in which the inert gas is contained is heated at a temperature higher than the softening temperature of the thermoplastic resin, under normal pressure, and foamed, is used.

Helium, nitrogen, carbon dioxide, argon and the like are given as inert gases. The permeation time and permeated quantity of the inert gas until the thermoplastic resin becomes saturated varies according to the type of thermoplastic resin to be foamed, type of inert gas, permeation pressure, and thickness of the sheet.

In this method, the roll formed from the thermoplastic resin sheet containing a metallic oxide and the separator can be contained in an organic solvent before the inert gas is contained in the thermoplastic resin sheet by holding the roll in a pressurized inert gas atmosphere.

Benzene, toluene, methylethylketone, ethyl formate, acetone, acetic acid, dioxane, m-cresol, aniline, acrylonitrile, dimethyl phtalate, nitroethane, nitromethane, benzylalcohol and the like are given as organic solvents. Of these, acetone is more preferable from the perspectives of handling and cost.

EXAMPLES

The present invention is described hereafter according to the examples. The measurements and evaluations of each characteristic of the obtained thermoplastic resin foam are as follows:

(Mean Particle Diameter of Metallic Oxide)

A sectional SEM photograph of the thermoplastic resin foam sheet was taken; the metallic oxide particle portions in the sectional SEM photograph were marked; image processing was performed on the particle portions using high-vision image analyzer; the mean diameter of when a total of 100 particles within a measuring scope are converted into a perfect circle was calculated; and the mean particle diameter of the metallic oxide was determined.

(Foam Expansion Rate)

The specific gravity of the foam sheet ($\rho f$) is measured by underwater replacement method, and foam expansion rate is calculated as the ratio ps/pf with the specific gravity of the resin (ps) before foaming. However, the calculation is performed with ps as 1.34.

(Mean Bubble Diameter)

The diameter is found pursuant to ASTM D3576-77. In other words, an SEM photograph of the sheet section was taken, a straight line was drawn in the horizontal direction and the vertical direction, respectively, on the SEM photograph, and the lengths t of strings of bubbles, through which the straight line traverses, were averaged. The multiplication of the photograph was determined to be M and was assigned to the following formula to find the mean bubble diameter d.

$$d = t / (0.616 \times M)$$

(Reflectance Ratio)

The reflectance ratio was measured in a wavelength of 550nm, using a spectrophotometer (UV-3101PC: manufactured by Shimazu Corporation). In Table 1, the diffuse reflectance of a white plate of solidified fine particles of barium sulfate was determined to be 100%, and the diffuse reflectance of respective thermoplastic resin foam is indicated by a relative value.

(Shape-Holding Property)

A hemispheric light-reflecting plate with an opening diameter of 100mm and depth of 70mm, as shown FIG. 1, was thermoformed by a vacuum forming machine using the obtained thermoplastic resin foam 1. The shape-holding property was evaluated by manually holding the obtained light reflecting plate, applying force thereto and observing the existence of any deformation.

(Example 1)

After 2 parts by weight of zinc oxide with a mean particle diameter of 500nm were added to polyethylene terephthalate (grade: SA-1206, manufactured by UNITIKA. LTD.) and kneaded, the resin was formed into a 0.30mm thick x 300mm wide x 60mm long sheet. This polyethylene terephthalate sheet and a separator (grade: FT300, manufactured by Japan Vilene Company, Ltd.) of 160μm thick x 290mm wide x 60mm long olefin system non-woven cloth with nominal weight of 55g/m² were stacked and rolled to form a roll such that there are no parts wherein the surfaces of polyethylene terephthalate .come into contact with each other.

Afterwards, the roll was placed within a pressure vessel, the vessel was pressurized to 6Mpa with carbon dioxide gas, and the carbon dioxide gas was allowed to permeate the polyethylene terephthalate sheet. The permeation time of the carbon dioxide gas to the polyethylene terephthalate sheet was 72 hours.

Next, the roll was removed from the pressure vessel, and the polyethylene terephthalate sheet, alone, was continuously supplied to a hot air circulating foaming furnace set at 240°C, such that the foaming time is one minute, and foamed while removing the separator.

The obtained foam was uniformly foamed and very fine, the mean bubble diameter being 2.6μm. Although the thickness of the foam was thin, 500μm, the reflectance ratio of the foam sheet showed an extremely high value of 98 %.

(Example 2)

After 2 parts by weight of zinc oxide with a mean particle diameter of 200nm were added to polyethylene terephthalate (grade: SA-1206, manufactured by UNITIKA. LTD.) and kneaded, the resin was formed into a 0.33mm thick x 300mm wide x 60mm long sheet. Aside from this, the same conditions as in Example 1 were set. The obtained foam was uniformly foamed and very fine, the mean bubble diameter being 4.1μm. Although the thickness of the foam was thin, 500μm, the reflectance ratio of the foam sheet showed an extremely high value of 99%.

(Example 3)

The same conditions as in Example 2 were set, aside from the quantity of zinc oxide added being 3 parts by weight. The obtained foam was uniformly foamed and very fine, the mean bubble diameter being 3.4μm. Although the thickness of the foam was thin, 500μm, the reflectance ratio of the foam sheet showed an extremely high value of 98%.

(Example 4)

The same conditions as in Example 2 were set, aside from the quantity of zinc oxide added being 5 parts by weight. The obtained foam was uniformly foamed and very fine, the mean bubble diameter being 3.9μm. Although the thickness of the foam was thin, 500μm, the reflectance ratio of the foam sheet showed an extremely high value of 99%.

(Example 5)

After 5 parts by weight of zinc oxide with a mean particle diameter of 200nm were added to polyethylene terephthalate (grade: SA-1206, manufactured by UNITIKA. LTD.) and kneaded, the resin was formed into a 0.20mm thick x 300mm wide x 60mm long sheet. Aside from this, the same conditions as in Example 1 were set. The obtained foam was uniformly foamed and very fine, the mean bubble diameter being 4.0μm. Although the thickness of the foam was thin, 300μm, the reflectance ratio of the foam sheet showed an extremely high value of 99%.

(Example 6)

After 2 parts by weight of zinc oxide with a mean particle diameter of 500nm were added to polyethylene terephthalate (grade: SA-1206, manufactured by UNITIKA. LTD.) and kneaded, the resin was formed into a 0.33mm thick x 300mm wide x 60mm long sheet. Aside from the foregoing, the same conditions as in Example 1 were set. The obtained foam was uniformly foamed and very fine, the mean bubble diameter being 4.0μm. Although the thickness of the foam was thin, 500μm, the reflectance ratio of the foam sheet showed an extremely high value of 99%.

(Comparative Example)

The polyethylene terephthalate (grade: C-0312, manufactured by UNITIKA. LTD.) with no zinc oxide added was used, and the resin was formed into a 0.33mm thick x 300mm wide x 60mm long sheet Aside from this, the same conditions as in Example 1 were set. Although the obtained foam has excellent shape-holding properties, the reflectance ratio was 97% because the mean bubble diameter was 11μm.

[Table 1]

| | Thickness of sheet after foaming (μm) | Mean bubble diameter (μm) | Foam expansion (times) | Reflectance ratio (%) | Shape-holding property |
|---|---|---|---|---|---|
| Example 1 | 500 | 2.6 | 5.7 | 98 | Good |
| Example 2 | 500 | 4.1 | 3.7 | 99 | Good |
| Example 3 | 500 | 3.4 | 2.8 | 98 | Good |
| Example 4 | 500 | 3.9 | 3 | 99 | Good |
| Example 5 | 300 | 4 | 3 | 99 | Good |
| Example 6 | 500 | 4 | 3 | 99 | Good |
| Comparative Example 1 | 500 | 11 | 4 | 97 | Good |

**Claims**

1. A thermoplastic resin foam which is a thermoplastic resin sheet containing a metallic oxide and has fine pores with mean bubble diameter of 10 μm or less within.

2. A thermoplastic resin foam according to claim 1, wherein the content of said metallic oxide is 0.1 to 15 parts by weight to said thermoplastic resin of 100 parts by weight.

3. A thermoplastic resin foam according to claim 1 or 2, wherein said metallic oxide is zinc oxide.

4. A thermoplastic resin foam according to any one of claims 1 to 3, wherein said thermoplastic resin is polyester.

5. A thermoplastic resin foam according to any one of claims 1 to 4 which is manufactured by a manufacturing method comprising a process for containing inert gas by holding a thermoplastic resin sheet containing metallic oxide in a pressurized inert gas atmosphere and a process for heating the thermoplastic resin sheet containing the inert gas under normal pressure and foaming the resin.

**FIG.1**

7

| | | |
|---|---|---|
| **INTERNATIONAL SEARCH REPORT** | International application No. | |
| | PCT/JP2005/015888 | |

**A. CLASSIFICATION OF SUBJECT MATTER**
*C08J9/12* (2006.01), *B29C67/20* (2006.01), *C08L67/00* (2006.01), *B29K267/00* (2006.01), *B29K105/04* (2006.01)

According to International Patent Classification (IPC) or to both national classification and IPC

**B. FIELDS SEARCHED**

Minimum documentation searched (classification system followed by classification symbols)
*C08J9/12* (2006.01), *B29C67/20* (2006.01), *C08L67/00* (2006.01), *B29K267/00* (2006.01), *B29K105/04* (2006.01)

Documentation searched other than minimum documentation to the extent that such documents are included in the fields searched
Jitsuyo Shinan Koho            1922-1996   Jitsuyo Shinan Toroku Koho   1996-2005
Kokai Jitsuyo Shinan Koho      1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 4-268345 A (The Furukawa Electric Co., Ltd.), 24 September, 1992 (24.09.92), Claims; Par. Nos. [0013], [0017] to [0020], [0022] to [0023], [0026]; examples 1 to 8 (Family: none) | 1-5 |
| X<br>A | JP 2004-59608 A (Mitsui Chemicals, Inc.), 26 February, 2004 (26.02.04), CLAIMS; Par. Nos. [0012] to [0017], [0022], [0032] to [0037] (Family: none) | 1-2,4<br>3,5 |

[X] Further documents are listed in the continuation of Box C.      [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>07 November, 2005 (07.11.05) | Date of mailing of the international search report<br>22 November, 2005 (22.11.05) |
| Name and mailing address of the ISA/<br>Japanese Patent Office | Authorized officer |
| Facsimile No. | Telephone No. |

Form PCT/ISA/210 (second sheet) (April 2005)

<div align="center">

**INTERNATIONAL SEARCH REPORT**

</div>

| | International application No. |
|---|---|
| | PCT/JP2005/015888 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 8-193141 A  (Sekisui Chemical Co., Ltd.), 30 July, 1996 (30.07.96), Claims; Par. Nos. [0019], [0022], [0030] to [0031], [0037] (Family: none) | 1-5 |
| A | JP 10-187071 A  (The Furukawa Electric Co., Ltd.), 14 July, 1998 (14.07.98), Claims; Par. Nos. [0011], [0015] to [0016] (Family: none) | 1-5 |
| A | JP 10-36547 A  (Yamaha Corp.), 10 February, 1998 (10.02.98), Claims; Par. No. [0009] (Family: none) | 1-5 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002122863 A
- WO 9701117 A
- JP 4296819 A
- JP 2242832 A
- JP 3055588 A